(19) **Europäisches Patentamt**

**European Patent Office**

**Office européen des brevets**

(11) **EP 1 228 572 B1**

(12) **EUROPEAN PATENT SPECIFICATION**

(45) Date of publication and mention
of the grant of the patent:
**31.08.2005 Bulletin 2005/35**

(51) Int Cl.⁷: $H04B\ 1/10$, $H04B\ 15/00$,
$G10L\ 21/02$

(21) Application number: **00975932.5**

(22) Date of filing: **26.10.2000**

(86) International application number:
**PCT/EP2000/010570**

(87) International publication number:
**WO 2001/037439 (25.05.2001 Gazette 2001/21)**

(54) **SYSTEM AND METHOD FOR NOISE SUPPRESSION IN A COMMUNICATION SIGNAL**

SYSTEM UND VERFAHREN ZUR RAUSCHUNTERDRÜCKUNG IN EINEM
KOMMUNIKATIONSSIGNAL

SYSTEME ET PROCEDE DE SUPPRESSION DU BRUIT DANS UN SIGNAL DE COMMUNICATION

(84) Designated Contracting States:
**AT BE CH CY DE DK ES FI FR GB GR IE IT LI LU
MC NL PT SE**

(30) Priority: **03.11.1999 US 432988**
**05.10.2000 US 680024**

(43) Date of publication of application:
**07.08.2002 Bulletin 2002/32**

(73) Proprietor: **TELEFONAKTIEBOLAGET LM
ERICSSON (publ)
164 83 Stockholm (SE)**

(72) Inventors:
 • **ROSENGREN, Per**
 **S-414 55 Göteborg (SE)**
 • **NILSSON, Andreas**
 **S-211 42 Malmö (SE)**

 • **LJUNGBERG, Per**
 **S-223 61 Lund (SE)**
 • **UDEN, Johan**
 **S-232 53 Akarp (SE)**
 • **LAKATOS, Peter, Gabor**
 **S-212 15 Malmö (SE)**
 • **CLAESSON, Ingvar**
 **S-240 10 Dalby (SE)**

(74) Representative: **O'Connell, David Christopher
HASELTINE LAKE,
Redcliff Quay
120 Redcliff Street
Bristol BS1 6HU (GB)**

(56) References cited:
 **EP-A- 0 878 928** **EP-A- 0 926 839**
 **US-A- 5 903 819**

## EP 1 228 572 B1

**Description**

**BACKGROUND**

The present invention relates to the suppression of a disturbance signal component of a communication signal, and more particularly to systems and methods for suppressing a periodic disturbance signal component having a known, or determinable, fundamental frequency, and its harmonic frequencies.

Many digital wireless systems in use today utilize a time slotted access system. An information signal (e.g., speech, data, video) is segmented, compressed, packetized and transmitted in a pre-allocated time slot. Time slots can be allocated to different users, a scheme commonly referred to as Time Division Multiple Access (TDMA). TDMA communication systems, such as the Global System for Mobile communications (GSM) in Europe, the Digital-Advanced Mobile Phone System (D-AMPS) system in North America, or the Personal Digital Cellular (PDC) system in Japan, allow a single radio frequency channel to be shared between multiple remote terminals, thereby increasing the capacity of the communication system. Also, Code Division Multiple Access (CDMA) access techniques use a framing structure to gather and transmit information across an air interface.

Time slots may also be allocated between alternating uplink and downlink transmissions, a scheme commonly referred to as Time Division Duplex (TDD). In a TDD system, the transmitter is inactive for a period of time during each frame, which period is of sufficient duration to receive a signal burst. The transmitter compensates for the loss of transmission time caused by this inactive period by buffering the digitized communication signal in a memory and subsequently transmitting the buffered communication signal at a higher rate than the rate at which it was buffered during its allocated slot. The peak transmitter power is increased by the same factor to support the higher rate.

In a GSM system, the TDMA circuits are switched on and off at a frequency of approximately 217 Hz. Switching the TDMA circuits creates a disturbance component at this frequency, referred to herein as the fundamental frequency, and its harmonic frequencies. The disturbance component is coupled into the communication signal, and may interfere with the information signal component of the communication signal. When the information signal component represents speech input, the disturbance signal component, if not suppressed, can cause an audible buzz, sometimes referred to as a "bumblebee" noise in the communication signal.

Existing radiotelephone or cellular communication systems suppress the bumblebee noise using various analog noise suppression techniques. For example, bumblebee noise can be suppressed by electrically decoupling the radio circuits, or by using microphones adapted to minimize the noise. Also digital techniques, such as digital noise cancellors, can be used to suppress bumblebee noise. However, digital noise chancellors are adaptive in nature, i.e., they estimate the noise and do not make use of prior knowledge of disturbing frequencies. As such, these techniques require costly components and can be difficult to implement. These techniques can also require the use of non-optimal system settings such as, for example, compensating offsets in microphone gain.

Linear notch filters can also be used to filter disturbance signals at known frequencies. However, an analysis of a Fourier expansion of a disturbing periodic signal that creates a bumblebee noise illustrates that the rate of decay of the frequency components of the disturbance signal is inversely proportional to the frequency (e.g., 1/frequcncy). Consequently, it is not effective to filter only the first few frequency components of the disturbing signal, because there are approximately fifteen frequency components having magnitudes large enough that they must be suppressed in the audible frequency band below 4KHz. The computational complexity of implementing fifteen notch filters renders this option undesirable.

U.S. Patent No. 5,903,819 to Romesburg describes a method and apparatus for suppressing periodic noise components of a communication signal. The apparatus includes a periodic interference signal estimate generator. A periodic impulse generator generates an impulse train at a frequency related to the frequency of a noise component of an input signal. The frequency of the noise component is determined by sutocorrelating the input signal and determining the amount of delay that produces the greatest autocorrelation value. The impulse train is coupled to the input of a FIR filter, which adaptively filters the periodic impulse train. The output of the FIR filter is the periodic interference signal estimate.

Accordingly, there is a need in the art for systems and methods for suppressing periodic disturbance components from communication signals.

**SUMMARY**

The present invention addresses these and other needs by providing a system and method that uses a priori knowledge that the disturbance signal component comprises a sum of sinusoids of known, or determinable, frequencies to derive an estimate of the disturbance signal component. In a preferred embodiment, the system uses a priori knowledge that the disturbance signal component has a fundamental frequency that corresponds to the 217 Hz frequency at which TDMA circuits are switched on and off to estimate the disturbance signal component. The estimated distur-

2

bance signal component can be subtracted from the communication signal. Preferably, the disturbance signal component is suppressed before the communication signal is transmitted. However, the communication signal maybe transmitted with the disturbance signal component intact, and the disturbance signal component may be estimated and subtracted in a receiver.

In one embodiment, the invention provides a method of suppressing a periodic disturbance signal component of a communication signal, in which the disturbance signal component has a fundamental frequency. The method comprises the steps of generating an estimated disturbance signal component by correlating the communication signal with a sinusoid that is a function of the fundamental frequency and a cosinusoid that is a function of the fundamental frequency, and subtracting the estimated disturbance signal component from the communication signal. Preferably, the step of generating an estimated disturbance signal component comprises estimating the amplitude and phase of the disturbance signal component at the fundamental frequency, and its harmonic frequencies in a predetermined frequency range, and summing a sinusoidal function of the amplitude and phase of the disturbance signal component over a predetermined number of frequency components. The communication signal may then be transmitted to a receiver.

In another embodiment, the invention provides a method of suppressing a periodic disturbance signal component of a communication signal, in which the disturbance signal component has a fundamental frequency. The method comprises calculating a first correlation array between the communication signal and a sinusoid having a frequency that is a function of the fundamental frequency, calculating a second correlation array between the communication signal and a cosinusoid having a frequency that is a function of the fundamental frequency, estimating the amplitude and phase of the disturbance signal component at the fundamental frequency and a predetermined number of harmonic frequencies, calculating the estimated disturbance signal component as the sum, over the fundamental frequency and a predetermined number of harmonic frequencies, of a sinusoid that is a function of the fundamental frequency, and subtracting the estimated disturbance signal component from the communication signal.

In another embodiment, the invention provides a system for suppressing a periodic disturbance signal component having a fundamental frequency in a communication signal. The system comprises a module for estimating portions of the disturbance signal component by correlating the communication signal with a sinusoid having a frequency that is a function of the fundamental frequency and a cosinusoid having a frequency that is a function of the fundamental frequency, a module for generating a disturbance signal representative of the disturbance signal component estimate, and a module for subtracting the estimated disturbance signal component from the from the communication signal.

In a further embodiment, the invention provides a remote communication terminal. The terminal comprises a conversion module for converting an analog signal into a communication signal comprising a set of digitized samples, a processor for receiving the digitized samples from the conversion module and calculating an estimate of a disturbance signal component of the communication signal by correlating the communication signal with a sinusoid that is a function of the fundamental frequency and a cosinusoid that is a function of the fundamental frequency, and a module for subtracting the estimate of a disturbance signal component from the communication signal.

### BRIEF DESCRIPTION OF THE DRAWINGS

These and other features of the invention will become more apparent upon reading the following detailed description in conjunction with the following drawings, in which:

Fig. 1 is a schematic depiction of a transmission format used in a GSM system, which format is used to describe the present invention;
Fig. 2 is a schematic depiction of a communication terminal embodying a disturbance signal suppressor circuit in accordance with an embodiment of the present invention;
Fig. 3 is a schematic depiction of a disturbance signal suppressor circuit in accordance with an embodiment of the present invention;
Fig. 4 is a flow chart illustrating a method of suppressing disturbance signal in a communication signal in accordance with an embodiment of the present invention;
Fig. 5 is a schematic depiction of a TDMA multiframe used in a GSM communication system; and
Fig. 6 is a schematic depiction of a disturbance signal suppressor circuit in accordance with another embodiment of the invention.

### DETAILED DESCRIPTION

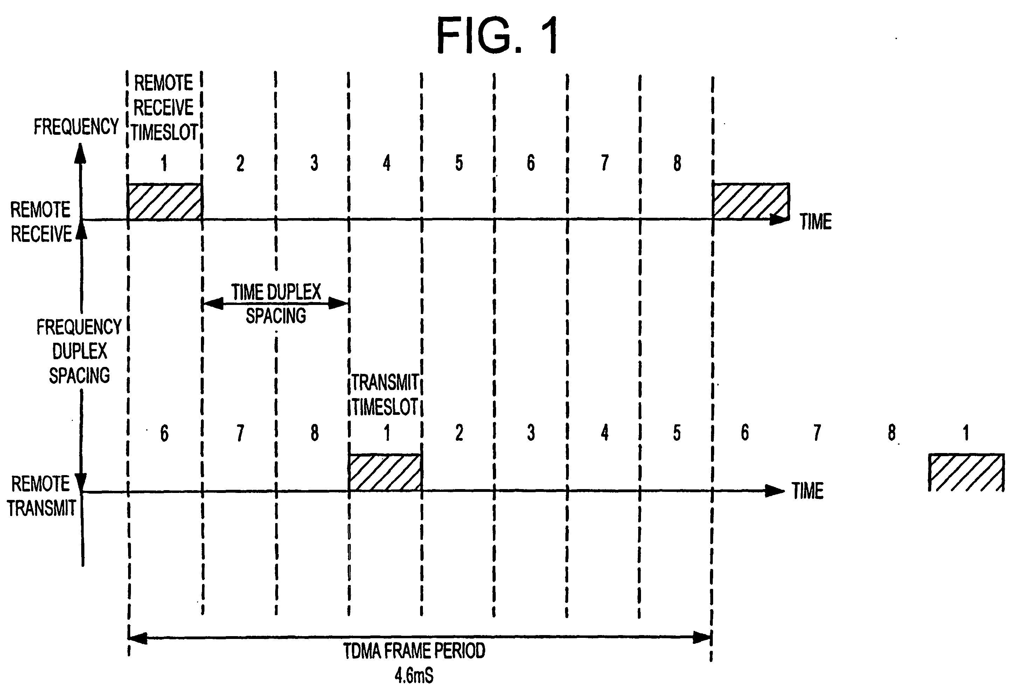

Fig. 1 is an example of the transmission format employed in the TDMA cellular system referred to as GSM. Therein, a repetitive frame period of approximately 4.6 ms is divided into eight timeslots. Remote terminals receive on a radio channel in a receive frequency band, each terminal receiving in an allocated one of the eight timeslots, e.g., receive timeslot 1 in Fig. 1. The terminal also transmits on a channel in the transmit frequency band in an allocated timeslot, e.g., transmit timeslot 1 in Fig. 1. Transmit timeslots are staggered in time relative to their corresponding receive timeslots so that the terminal does not have to transmit and receive at the same time. This is illustrated in the example of Fig. 1 as the time duplex spacing of two timeslots between timeslot 1 on terminal receive frequency and timeslot 1 on the terminal transmit frequency. When different transmit and receive bands are employed, the base station may receive and transmit in all timeslots, and thus support eight communication sessions in the same transmit/receive channel pair. Otherwise, if no frequency-duplex spacing is employed, the base station can, for example, use four of the timeslots for transmission and four for reception, thus supporting four communication sessions in a single transmit/receive channel. In GSM, timeslots not used by a particular terminal for transmission and reception are available for connection management purposes, e.g., to manage hand-overs to other base stations.

The transmit pulse formats are defined by the GSM specifications and include a guard time between bursts, an up/down-ramping time to turn the transmitter power smoothly on and off to avoid spectral splatter into unsynchronized adjacent channels, some guard bits at each end of each burst, and the main body of the TDMA burst which transmits 114 data bits, 26 sync bits, and two control bits at a flat power level. The up/down ramping times are adequate to prevent spectral spreading into an adjacent channel 200 KHz away, but are not designed to control harmonics of the approximately 217 Hz pulse repetition rate in the audio band of 300 Hz to 4KHz. Electrical signals at the 217 Hz frequency and its harmonic frequencies may be coupled into the analog microphone signal in the terminal, creating a disturbing signal that can cause an annoying buzzing sound in the speech signal transmitted by the terminal.

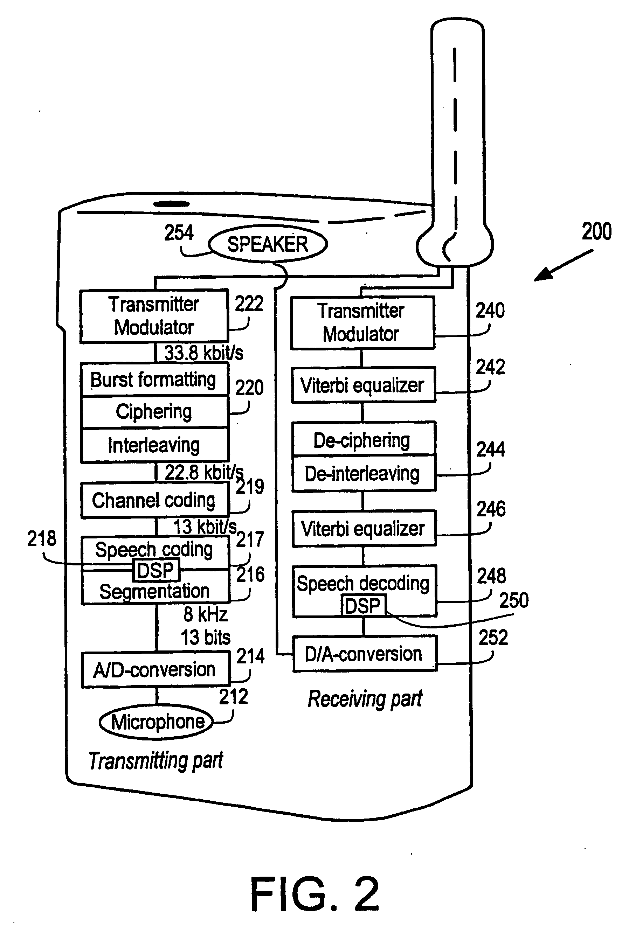

Fig. 2 is a schematic diagram of a remote communication terminal 200 in which an embodiment of the invention may be implemented. In an exemplary embodiment, remote terminal 200 is a mobile phone (e.g., mobile station, mobile terminal, etc.) adapted for use in a digital TDMA cellular communication system, such as, for example, the GSM system in Europe, the PDC system in Japan, or the D-AMPS system in North America. It will be appreciated, however, that the present invention is not limited to a particular access system. Principles of the present invention are applicable in any type of communication system in which suppression of periodic interference is of interest. Remote terminals are widely known and readily commercially available. Accordingly, only those aspects of remote terminal 200 that are pertinent to the present invention are described in detail. For additional information relating to remote terminals, the interested reader is referred to U.S. Patent No. 5,745,523 to Dent et al.

Referring to Fig. 2, remote terminal 200 includes a transmitting part and a receiving part. In the transmitting part, an analog speech signal from microphone 212 is digitized by an analog-to-digital (A/D) converter 214. Segmentation unit 216 divides the digitized speech signal into 20 ms segments, which are coupled to the speech coder 217. Speech coder 217 reduces the bit rate of the digitized speech signals, such that the resulting speech channels can remain within the allowed frequency band. The bit rates depicted in Fig. 2 are per physical channel.

In one embodiment, the present invention is implemented in the transmitting part of remote terminal 200. A Digital Signal Processor (DSP) or similar type of digital processor 218 is associated with the speech coder 217 to receive the incoming stream of digitized speech samples from speech coder 217. In brief, processor 218 calculates an estimate of the disturbing signal by estimating the amplitude $A_n$ and the phase $\phi_n$ at each frequency component of the disturbance signal component. The disturbance signal components are summed to derive an estimate of the disturbing signal. The estimated disturbance signal component may then be subtracted from the communication signal to suppress the disturbance signal component of the communication signal. The approximated speech signal may then be directed to a module 219 for channel coding, a module 220 for interleaving, encoding, and burst formatting, and a module 222 for modulating a carrier and transmitting over a communication channel.

The receiving part of remote terminal 200 includes a module 240 for receiving and demodulating a carrier, a viterbi equalizer 242, a module 244 for deciphering and deinterleaving the received communication signal, a module 246 for decoding the signal, and a module 248 for decoding the speech (e.g., the information) component of the signal. In another embodiment, the invention may be implemented in the receiving part of remote terminal 200. A Digital Signal Processor (DSP) or similar type of digital processor 250 is associated with the speech decoder 248 to receive the incoming stream of digitized speech samples, which represents the communication signal, from speech decoder 248. In brief, processor 250 calculates an estimate of the disturbance signal component by estimating the amplitude $A_n$ and the phase $\phi_n$ at each frequency component of the disturbing signal component. The estimated disturbance signal component may be subtracted from the communication signal, which is then sent to a module 252 for digital-to-analog (D/A) conversion and to a suitable speaker 254.

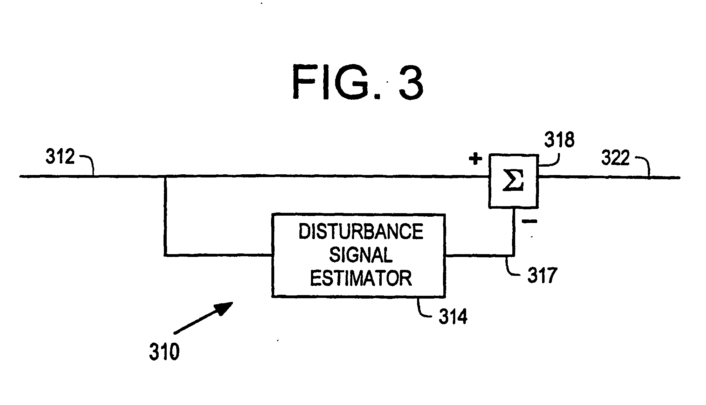

Fig. 3 is a schematic depiction of a disturbance signal suppressor circuit 310 in accordance with an embodiment of the present invention. Disturbance signal suppressor 310 receives a communication signal, here applied on line 312. The communication signal includes an information signal component and a disturbance signal component. Among the disturbance signal components which might be superimposed upon the information signal is a periodic disturbance signal, such as the disturbance signal introduced by TDMA or other framing circuits switching on and off.

Disturbance signal suppressor circuit 310 shown in Fig. 3 includes a disturbance signal component estimator 314 coupled to line 312 to receive the signal applied thereon. The disturbance signal component estimator 314 generates a signal on line 317 that is an estimate of the disturbance signal component. Line 317 is coupled to a negative input of a summing device (e.g., a summer) 318. Line 312, upon which the communication signal is applied, is applied to a positive input terminal on summer 318. Summer 318 subtracts the disturbance signal component estimate on line 317 from the communication signal on line 312 to produce a disturbance signal-suppressed communication signal on line 322.

In an exemplary embodiment, disturbance signal suppressor circuit 310 forms a portion of the transmitter, such that a periodic disturbance signal (e.g., the disturbance signal component) is removed from the communication signal prior to transmission. In an alternate embodiment, disturbance signal suppressor circuit may be implemented in a receiver, such that a periodic disturbance signal in communication signals received by the receiver is removed before the communication signal is provided to a listener positioned at the receiver.

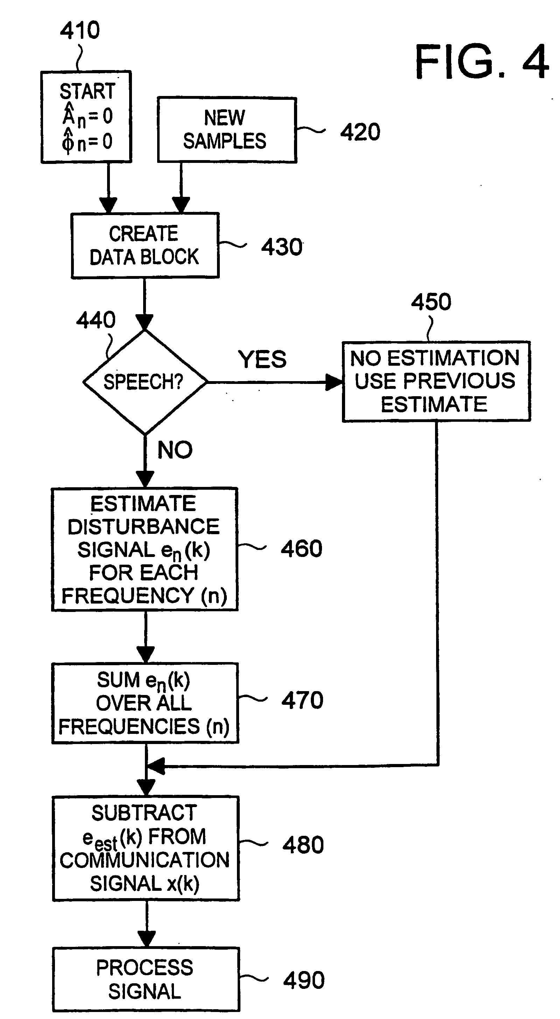

Fig. 4 is a flow chart illustrating a method of suppressing a disturbance signal component in a communication signal in accordance with an embodiment of the present invention. In brief, the process begins at step 410, preferably when a communication session is initiated and the phase and amplitude estimates of the disturbance signal component are set to zero. The sampled communication signal is received at 420. At step 430 the communication signal is gathered into a block. At step 440, a test is conducted to determine whether speech input is being received by the remote terminal. If speech input is not being received by the remote terminal, then the disturbance signal component is estimated at step 460, and at step 470 the estimated disturbance signal components at the fundamental frequency and its higher harmonic frequencies are summed. At step 480, the estimated disturbance signal is subtracted from the communication signal to suppress the disturbance component. If, at step 440, speech input is being received by the remote terminal, then the disturbance signal component is not estimated (step 450), and during the subtraction, at step 480, the previous estimate of the disturbance signal component is used. At step 490, the communication signal may be processed as required for transmission, or for presentation to the user if the method of Fig. 4 is implemented in a receiver. The process of estimating the disturbance signal component is explained in greater detail below.

At step 460, the present invention makes use of a priori knowledge that the disturbance signal component consists of a sum of harmonically related sinusoids to calculate an estimated disturbance signal component. More particularly, the disturbance signal component can be expressed as:

$$e(k) = \sum_{n=1}^{m} A_n \bullet \sin(2\pi(n\frac{f_0}{f_s})k + \phi_n), \quad k \in [0, K-1] \qquad (1)$$

where:

e = the disturbance signal component;
n = the number of the frequency component;
m = the highest harmonic frequency of interest (m = 15 in one embodiment);
$A_n$ = the amplitude of the $n^{th}$ frequency component;
K = the number of samples in an input block;
k = a counter that counts all samples in an input block (k $\in$ [0, K-1]);
$f_0$ = the fundamental frequency (216.67 Hz in GSM);
$f_s$ = the frequency at which the input information is sampled (8KHz in GSM); and
$\phi_n$ = the phase of the $n^{th}$ frequency component.

Adopting the notation that a communication signal, y, is the sum of an information signal, x, and a disturbance signal component, e, this relationship may be expressed mathematically as follows:

$$y = x + e \qquad (2)$$

An estimate of the disturbance signal component, $e_{est}$, can be derived using equation (1) by generating an estimate of the amplitude, $A_n$, and the frequency, $\phi_n$, of each frequency component, n, of the disturbance signal component. The estimated disturbance signal component, $e_{est}$, can then be subtracted from the communication signal to suppress the disturbance signal component.

$$x_{est} = y - e_{est} = x + e - e_{est} \tag{3}$$

The estimation of the amplitude $A_n$ and phase $\phi_n$ may be performed by calculating the correlation between the communication signal (y) and $\sin(2\pi k n f_0 / f_s)$ and $\cos(2\pi k n f_0 / f_s)$, where k is a counter that counts all samples in a given block. The correlation equations may be expressed mathematically as follows:

$$B_{n,est.} = \frac{2}{K} \sum_{k=1}^{K} y_k \bullet \sin(2\pi (n \frac{f_0}{f_s})k) \tag{4}$$

and

$$C_{n,est.} = \frac{2}{K} \sum_{k=1}^{K} y_k \bullet \cos(2\pi (n \frac{f_0}{f_s})k) \tag{5}$$

The amplitude $A_{n,est}$ and phase $\phi_{n,est}$ of the disturbance signal component can be estimated, respectively, as follows:

$$A_{n,est} = ((B_{n,est})^2 + (C_{n,est})^2)^{\frac{1}{2}} \tag{6}$$

and

$$\phi_{n,est} = \mathrm{atan}(C_{n,est} / B_{n,est}) \tag{7}$$

After performing the correlations of equations (4) and (5) for the fundamental frequency and all n-1 harmonic frequencies, an estimate of the amplitude $A_{n,est}$ and the phase $\phi_{n,est}$ of the disturbance signal component at each harmonic can be determined using equations (6) and (7). An estimate of the disturbance signal component can then be calculated using equation (1) and then subtracted from the communication signal as illustrated in equation (3) to suppress the disturbance signal in the information signal. In mathematical terms:

$$x_{est} = x + \sum_{n=1}^{15} A_n \bullet \sin(2\pi (n \frac{f_0}{f_s})k + \phi_n) - \sum_{n=1}^{15} A_{n,est.} \bullet \sin(2\pi (n \frac{f_0}{f_s})k + \phi_{n,est.}) \tag{8}$$

In a preferred embodiment, the correlation calculations set forth in equations (4) and (5) are performed on a frame size over which the fundamental frequency has an integer number of periods. If the fundamental frequency produces an integer number of periods for the selected block size, then all higher harmonic frequencies will also produce an integer number of periods. In a GSM system, a frame size of 480 samples taken at an 8KHz rate produces exactly 13 periods of a 216.67 Hz disturbance signal, and therefore satisfies this criteria. It will be appreciated that the frames can be staggered so that a delay of 480 samples is not required. For example, correlations can be performed on 480-sample frames using each new 160 samples received by the terminal (e.g., 320 previously received sample frames). This increases the computational load on the terminal's processor, but decreases the delay in providing error correction.

In a preferred embodiment, the estimation process is performed during pauses in speech input to avoid incorporating energy from the speech signal (e.g., the information signal) in the calculation of the disturbance signal component. Human speech includes frequency components at the same frequency as the energy that creates the bumblebee noise, and can interfere with measurement of the disturbance signal component. GSM speech coders include a Voice Activity Detector (VAD) for detecting whether the remote terminal is receiving voice input associated with the Digital Signal Processor. Accordingly, a remote terminal according to the present invention may be adapted to receive a signal from the VAD to indicative of whether speech input is present, and to measure the disturbance signal component only when the signal indicates that no speech input is present.

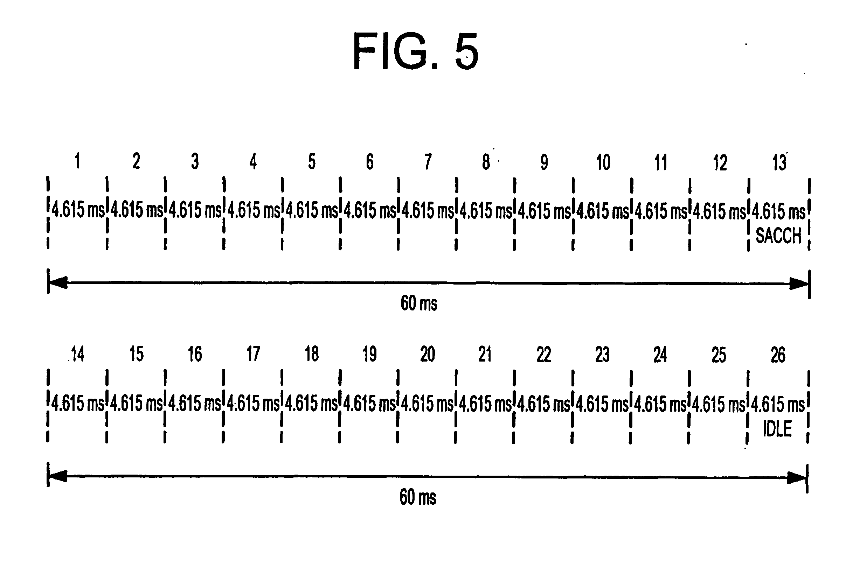

According to a further aspect, the present invention may be adapted to compensate for secondary disturbance signals introduced by transmission schemes that include one or more idle time slots, e.g., time slots in which no information is transmitted. By way of example, and not by limitation, a GSM communication system compiles 26 TDMA frames, each representing 4.615 ms, into a 120 ms multiframe. An exemplary TDMA multiframe is illustrated in Fig. 5. Frames 1-12 and 14-25 are required for transmission of speech coded data. Frame 13 is used for transmission of the slow associated control channel (SACCH) control data frame. TDMA frame 26 is an idle frame, in which there is no radio transmission. Because the radio of the remote terminal is not transmitting during the idle frame, the disturbance signal is zero during this time period.

Due to the absence of radio transmission during the idle frame, the disturbance signal introduced by the switching of the TDMA circuits is not perfectly periodic with the TDMA frame rate. If the disturbance signal is modeled as set forth above (e.g., using equation (1)), then the estimated disturbance signal is periodic. Subtracting the estimated disturbance signal, which is periodic, from the communication signal to compensate for a disturbance signal that is not perfectly periodic may introduce a secondary periodic disturbance signal into the communication signal. The fundamental frequency of the secondary disturbance introduced into the communication signal is approximately 8 Hz (e.g., 1/120ms).

To avoid introducing a secondary disturbance signal into the communication signal, a remote communication terminal according to the present invention deactivates the circuitry that subtracts the estimated disturbance signal, $e_{est}$, from the communication signal during the idle frame (e.g., frame 26 in the TDMA multiframe). In an exemplary embodiment, a remote terminal uses a synchronization code embedded in commands passed between the DSP and the terminal's processor to locate an idle frame in the TDMA multiframe structure. Once the idle frame is located, the circuitry for subtracting the estimated disturbance signal may be deactivated during the idle frame's time slot to avoid introducing a secondary disturbance signal into the communication signal.

More particularly, in a remote terminal that operates in accordance with the GSM standard, the terminal's processor communicates with the DSP using commands. Importantly, the DSP is supplied with information that can be used to identify the location of the idle frame in the GSM multiframe structure. In accordance with the present invention, a logic unit operational in the processor (or the DSP) uses the information to identify the idle frame in the multiframe structure and to generate a signal that deactivates the circuitry for subtracting the estimated disturbance signal component from the communication signal during the idle frame. Deactivating this circuitry precludes the introduction of a secondary disturbance signal into the communication signal.

In one exemplary embodiment, the idle frame may be located using "synchinfo" bits associated with the code and decode commands transmitted between the DSP and the host ASIC of a communication terminal. In a GSM system, the host ASIC transmits a code command to the DSP at intervals of 18.465 ms, 18.465 ms, 23.070 ms, such that over a period of three code commands the average time duration between transmissions is 20 ms. A code command issued from the host ASIC initiates a reply from the DSP. The reply contains speech coded data from the 160 most recently received pulse code modulation (PCM) samples.

The code commands transmitted from the host ASIC include a "synchinfo" field which contains information that indicates the time duration to the next code command. The "syncinfo" field contains one of six possible values, each of which correspond to a specific time position in the 120 ms multiframe structure. Thus, the position of the idle frame may be determined from the "syncoinfo" information in the code commands.

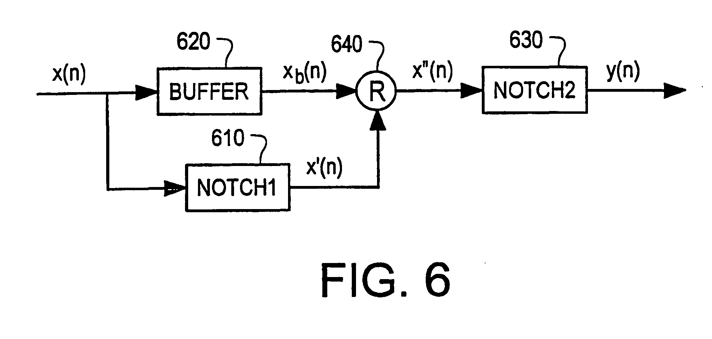

To avoid introducing a secondary periodic disturbance signal into the communication signal, a remote terminal according to another embodiment of the invention is adapted to introduce a disturbance signal component into the idle time slot before the bumblebee noise is filtered from the communication signal. This is illustrated schematically in Fig. 6.

Referring to Fig. 6, the input signal x(n) is transmitted to a first notch filter 610 and to a buffer 620. First notch filter 610 generates an output signal x'(n) in which preferably the idle frame (e.g., frame 26 in a GSM TDMA frame) includes a disturbance signal component corresponding to the periodic disturbance signal. In a GSM system, first notch filter 610 preferably generates a disturbance signal component having a fundamental frequency of approximately 217 Hz, and also includes higher order harmonic frequency components. Preferably, first notch filter 610 has a sufficiently narrow bandwidth so that first notch filter 610 introduces the disturbance signal only into the idle frame. However, it will be appreciated that the bandwidth of first notch filter 610 may be such that additional time frames are affected by the disturbance signal.

The idle frame of the buffered output signal $x_b(n)$ is then replaced in the replacement circuit 640 with the respective idle frame in the output signal of x'(n) to produce a signal x"(n) in which the idle frame includes a periodic disturbance signal component. This replacement may be performed using suitable circuitry, e.g., a summer. The replacement circuitry 640 locates the idle frame in the multiframe structure using the synchinfo bit as described above.

The signal x''(n) is input to a second notch filter 630 which suppresses the bumblebee disturbance signal in the time frame. In a GSM system, second notch filter 630 preferably subtracts a disturbance signal component having a fundamental frequency of approximately 217 Hz, and also includes higher order harmonic frequency components corresponding to those introduced by first notch filter 610. Preferably, second notch filter 630 operates on the entire multiframe structure. Advantageously, because the idle frame includes a disturbance signal component, second notch filter will not introduce a secondary periodic disturbance signal into the communication signal.

The present invention is described above with reference to particular embodiments, and it will be readily apparent to those skilled in the art that it is possible to embody the invention in forms other than those described above. The particular embodiments described above are merely illustrative and should not be considered restrictive in any way. The scope of the invention is determined given by the following claims, and all variations and equivalents that fall within the range of the claims are intended to be embraced therein.

**Claims**

1. A method of suppressing a periodic disturbance signal component of a communication signal, the disturbance signal component having a known or determinable fundamental frequency, comprising:

    generating an estimated disturbance signal component; and
    subtracting the estimated disturbance signal component from the communication signal (480);

    **characterised in that** the step of generating the estimated disturbance signal component comprises correlating the communication signal with a sinusoid that is a function of the fundamental frequency and a cosinusoid that is a function of the fundamental frequency (460).

2. A method according to claim 1, wherein the step of generating an estimated disturbance signal component comprises correlating the communication signal over a predetermined number of samples, the predetermined number selected such that a sinusoid that is a function of the fundamental frequency has an integer number of periods.

3. A method according to claim 1, wherein the step of generating an estimated disturbance signal component comprises estimating the amplitude and phase of the disturbance signal component at the fundamental frequency.

4. A method according to claim 1, wherein the step of generating an estimated disturbance signal component comprises estimating the amplitude and phase of the disturbance signal component at the fundamental frequency, and its harmonic frequencies in a predetermined frequency range (470).

5. A method according to claim 4, wherein the predetermined frequency range corresponds to a frequency range audibly detectable by the human ear.

6. A method according to claim 1, wherein the step of generating an estimated disturbance signal component (460) comprises estimating the amplitude and phase of the disturbance signal component at the fundamental frequency, and its harmonic frequencies in a predetermined frequency range, and summing a sinusoidal function of the amplitude and phase of the disturbance signal over a predetermined number of frequency components.

7. A method according to claim 1, further comprising the step of processing the communication signal for transmission (490).

8. A method according to claim 1, further comprising the steps of:

    determining the position of an idle frame in a multiframe structure; and
    deactivating the circuitry for subtracting the estimated disturbance signal component during processing of the idle frame.

9. A method according to claim 1, further comprising the steps of:

    determining the position of an idle frame in a multiframe structure; and
    adding a disturbance signal component into the idle frame.

10. A method according to one of claims 1, 7, 8 or 9, wherein the step of generating comprises:

(a) calculating a first correlation array between the communication signal and the sinusoid that is a function of the fundamental frequency;
(b) calculating a second correlation array between the communication signal and the cosinusoid that is a function of the fundamental frequency;
(c) estimating, from the first and second arrays, the amplitude and phase of the disturbance signal component at the fundamental frequency and a predetermined number of harmonic frequencies; and
(d) calculating, using the estimated amplitude and phase, the estimated disturbance signal as the sum, over the fundamental frequency and a predetermined number of harmonic frequencies, of a sinusoid that is a function of the fundamental frequency.

11. A method according to claim 10, wherein the step of calculating the first correlation array comprises calculating:

$$B_{n,est.} = \frac{2}{K}\sum_{k=1}^{K} y_k \bullet \sin(2\pi(nf_0/f_s)k)$$

where:

n = the number of the frequency component;
K = the number of samples in an input block;
k = a counter that counts all samples in an input block (ke [0, K-1]);
$f_0$ = the fundamental frequency; and
$f_s$ = the frequency at which the input information is sampled.

12. A method according to claim 11, wherein the step of calculating the second correlation array comprises calculating:

$$C_{n,est.} = \frac{2}{K}\sum_{k=1}^{K} y_k \bullet \cos(2\pi(nf_0/f_s)k)$$

where:
n = the number of the frequency component;
K = the number of samples in an input block;
k = a counter that counts all samples in an input block (k $\in$ [0, K-1]);
$f_0$ = the fundamental frequency; and
$f_s$ = the frequency at which the input information is sampled.

13. A method according to claim 12, wherein the step of estimating the amplitude of the disturbance signal component comprises calculating, for the fundamental frequency and a predetermined number of harmonic frequencies, the following:

$$A_{n,est.} = ((B_{n,est})^2 + (C_{n,est})^2)^{1/2}$$

14. A method according to claim 12, wherein the step of estimating the phase of the disturbance signal component comprises calculating, for the fundamental frequency and a predetermined number of harmonic frequencies, the following:

$$\varphi_{n,est.} = a\tan(C_{n,est}/B_{n,est})$$

15. A method according to claim 11, wherein the step of calculating the estimated disturbance signal comprises calculating:

$$e(k)_{est} = \sum_{n=1}^{m} A_{n,est} \bullet \sin\left(2\pi\left(n\,f_0/f_s\right)k + \phi_{n,est}\right), \quad k \in \left[0, K-1\right]$$

where:

e = the disturbance signal component;
n = the number of the frequency component;
m = the highest harmonic frequency of interest;
$A_n$ = the amplitude of the $n^{th}$ frequency component;
K = the number of samples in an input block;
k = a counter that counts all samples in an input block (k $\in$ [0, K-1]);
$f_0$ = the fundamental frequency;
$f_s$ = the frequency at which the input information is sampled; and
$\Phi_n$ = the phase of the $n^{th}$ frequency component.

**16.** A method according to claim 10, wherein steps (a) through (d) and the step of subtracting are performed in a remote communication terminal, and further comprising the step of detecting whether the remote terminal is receiving speech input, and wherein steps (a) through (c) are performed only when there is no speech input to the remote terminal.

**17.** A system for suppressing a periodic disturbance signal component having a fundamental frequency in a communication signal, comprising:

a module for generating an estimated disturbance signal component (314); and
a module for subtracting the estimated disturbance signal from the communication signal (318);

**characterised in that** the module for generating (314) is adapted to correlate the communication signal with a sinusoid that is a function of the fundamental frequency and a cosinusoid that is a function of the fundamental frequency.

**18.** A remote communication terminal (200), comprising:

a conversion module for converting an analog signal into a communication signal comprising a set of digitized samples (214);
a processor for receiving the digitized samples from the conversion module and calculating an estimate of a disturbance signal component (218); and
a module for subtracting the estimated disturbance signal component from the communication signal (218);

**characterised in that** the processor (218) is adapted to correlate the communication signal with a sinusoid that is a function of the fundamental frequency and a cosinusoid that is a function of the fundamental frequency to calculate the estimate of the disturbance signal.

**19.** A remote communication terminal (200) according to claim 18, further comprising:

a module for formatting the communication for transmission (220).

**20.** A remote communication terminal (200) according to claim 18, further comprising:

a module for transmitting the communication signal (222).

**Patentansprüche**

**1.** Verfahren zum Unterdrücken einer periodischen Störsignalkomponente eines Kommunikationssignals, wobei die Störsignalkomponente eine bekannte oder bestimmbare Grundfrequenz hat, wobei das Verfahren folgendes aufweist:

Erzeugen einer geschätzten Störsignalkomponente;

Subtrahieren der geschätzten Störsignalkomponente von dem Kommunikationssignal (480);

**dadurch gekennzeichnet, dass** der Schritt zum Erzeugen der geschätzten Störsignalkomponente ein Korrelieren des Kommunikationssignals mit einer Sinusform, die eine Funktion der Grundfrequenz ist, und einer Kosinusform, die eine Funktion der Grundfrequenz ist, aufweist (460).

2. Verfahren nach Anspruch 1, wobei der Schritt zum Erzeugen einer geschätzten Störsignalkomponente ein Korrelieren des Kommunikationssignals über eine vorbestimmte Anzahl von Abtastungen aufweist, wobei die vorbestimmte Anzahl so ausgewählt ist, dass eine Sinusform, die eine Funktion der Grundfrequenz ist, eine ganze Zahl von Perioden hat.

3. Verfahren nach Anspruch 1, wobei der Schritt zum Erzeugen einer geschätzten Störsignalkomponente ein Schätzen der Amplitude und der Phase der Störsignalkomponente bei der Grundfrequenz aufweist.

4. Verfahren nach Anspruch 1, wobei der Schritt zum Erzeugen einer geschätzten Störsignalkomponente ein Schätzen der Amplitude und der Phase der Störsignalkomponente bei der Grundfrequenz aufweist, und ihren harmonischen Frequenzen in einem vorbestimmten Frequenzbereich (470).

5. Verfahren nach Anspruch 4, wobei der vorbestimmte Frequenzbereich einem Frequenzbereich entspricht, der durch ein menschliches Ohr hörbar erfassbar ist.

6. Verfahren nach Anspruch 1, wobei der Schritt zum Erzeugen einer geschätzten Störsignalkomponente (460) ein Schätzen der Amplitude und der Phase der Störsignalkomponente bei der Grundfrequenz und ihrer harmonischen Frequenzen in einem vorbestimmten Frequenzbereich und ein Summieren einer sinusförmigen Funktion der Amplitude und der Phase des Störsignals über eine vorbestimmte Anzahl von Frequenzkomponenten aufweist.

7. Verfahren nach Anspruch 1, das weiterhin den Schritt zum Verarbeiten des Kommunikationssignals zur Übertragung aufweist (490).

8. Verfahren nach Anspruch 1, das weiterhin die folgenden Schritte aufweist:

Bestimmen der Position eines Leer-Frames in einer Mehrfachframestruktur; und

Deaktivieren der Schaltung zum Subtrahieren der geschätzten Störsignalkomponente während einer Verarbeitung des Leer-Frames.

9. Verfahren nach Anspruch 1, das weiterhin die folgenden Schritte aufweist:

Bestimmen der Position eines Leer-Frames in einer Mehrfachframestruktur; und

Addieren einer Störsignalkomponente in dem Leer-Frame.

10. Verfahren nach einem der Ansprüche 1, 7, 8 oder 9, wobei der Schritt zum Erzeugen folgendes aufweist:

(a) Berechnen einer ersten Korrelationsmatrix zwischen dem Kommunikationssignal und der Sinusform, die eine Funktion der Grundfrequenz ist;

(b) Berechnen einer zweiten Korrelationsmatrix zwischen dem Kommunikationssignal und der Kosinusform, die eine Funktion der Grundfrequenz ist;

(c) aus der ersten und der zweiten Matrix Schätzen der Amplitude und der Phase der Störsignalkomponente bei der Grundfrequenz und einer vorbestimmten Anzahl von harmonischen Frequenzen; und

(d) unter Verwendung der geschätzten Amplitude und Phase Berechnen des geschätzten Störsignals als die

11

Summe über der Grundfrequenz und einer vorbestimmten Anzahl von harmonischen Frequenzen aus einer Sinusform, die eine Funktion der Grundfrequenz ist.

11. Verfahren nach Anspruch 10, wobei der Schritt zum Berechnen der ersten Korrelationsmatrix ein Berechnen von folgendem aufweist:

$$B_{n,est} = \frac{2}{K} \sum_{k=1}^{K} y_k \bullet \sin(2\pi(n\frac{f_0}{f_s})k)$$

wobei:

n = die Anzahl der Frequenzkomponenten;
K = die Anzahl von Abtastungen in einem Eingangsblock;
k = ein Zähler, der alle Abtastungen in einem Eingangsblock zählt ($k\in[0,K-1]$);
$f_0$ = die Grundfrequenz und
fs = die Frequenz, bei welcher die Eingangsinformation abgetastet wird.

12. Verfahren nach Anspruch 11, wobei der Schritt zum Berechnen der zweiten Korrelationsmatrix ein Berechnen von folgendem aufweist:

$$C_{n,est} = \frac{2}{K} \sum_{k=1}^{K} y_k \bullet \cos(2\pi(n\frac{f_0}{f_s})k)$$

wobei:

n = die Anzahl der Frequenzkomponenten;
K = die Anzahl von Abtastungen in einem Eingangsblock;
k = ein Zähler, der alle Abtastungen in einem Eingangsblock zählt ($k\in[0,K-1]$);
$f_0$ = die Grundfrequenz und
fs = die Frequenz, bei welcher die Eingangsinformation abgetastet wird.

13. Verfahren nach Anspruch 12, wobei der Schritt zum Schätzen der Amplitude der Störsignalkomponente ein Berechnen für die Grundfrequenz und eine vorbestimmte Anzahl von harmonischen Frequenzen von dem Folgenden aufweist:

$$A_{n,est} = ((B_{n,est})^2 + (C_{n,est})^2)^{1/2}$$

14. Verfahren nach Anspruch 12, wobei der Schritt zum Schätzen der Phase der Störsignalkomponente ein Berechnen für die Grundfrequenz und eine vorbestimmte Anzahl von harmonischen Frequenzen von dem Folgenden aufweist:

$$\varphi_{n,est} = atan(C_{n,est}/C_{n,est})$$

15. Verfahren nach Anspruch 11, wobei der Schritt zum Berechnen des geschätzten Störsignals ein Berechnen von Folgendem aufweist:

$$e(k) = \sum_{n=1}^{m} A_n \bullet \sin(2\pi(n\frac{f_0}{f_s})k + \phi_n), \ \ k \in [0, K-1]$$

wobei:

e = die Störsignalkomponente;
n = die Anzahl der Frequenzkomponenten;
m = die höchste harmonische Frequenz von Interesse;
$A_n$ = die Amplitude der n-ten Frequenzkomponente;
K = die Anzahl von Abtastungen in einem Eingangsblock;
k = ein Zähler, der alle Abtastungen in einem Eingangsblock zählt (k $\in$[0,K-1];
$f_0$ = die Grundfrequenz;
$f_s$ = die Frequenz, bei welcher die Eingangsinformation abgetastet wird; und
$\phi_n$ = die Phase der n-ten Frequenzkomponente.

16. Verfahren nach Anspruch 10, wobei die Schritte (a) bis (d) und der Schritt zum Subtrahieren in einem entfernten Kommunikationsendgerät durchgeführt werden, und das weiterhin den Schritt zum Erfassen aufweist, ob das entfernte Endgerät eine Spracheingabe empfängt, und wobei die Schritte (a) bis (C) nur dann durchgeführt werden, wenn es keine Spracheingabe zum entfernten Endgerät gibt.

17. System zum Unterdrücken einer periodischen Störsignalkomponente mit einer Grundfrequenz in einem Kommunikationssignal, welches System folgendes aufweist:

ein Modul zum Erzeugen einer geschätzten Störsignalkomponente (314); und

ein Modul zum Subtrahieren des geschätzten Störsignals aus dem Kommunikationssignal (318);

**dadurch gekennzeichnet, dass** das Modul zum Erzeugen (314) dazu geeignet ist, das Kommunikationssignal mit einer Sinusform, die eine Funktion der Grundfrequenz ist, und einer Kosinusform, die eine Funktion der Grundfrequenz ist, zu korrelieren.

18. Entferntes Kommunikationsendgerät (200), das folgendes aufweist:

ein Umwandlungsmodul zum Umwandeln eines analogen Signals in ein Kommunikationssignal mit einer Gruppe von digitalisierten Abtastungen (214);

einen Prozessor zum Empfangen der digitalisierten Abtastungen von dem Umwandlungsmodul und zum Berechnen einer Schätzung einer Störsignalkomponente (218); und

ein Modul zum Subtrahieren der geschätzten Störsignalkomponente von dem Kommunikationssignal (218);

**dadurch gekennzeichnet, dass** der Prozessor (218) dazu geeignet ist, das Kommunikationssignal mit einer Sinusform, die eine Funktion der Grundfrequenz ist, und einer Kosinusform, die eine Funktion der Grundfrequenz ist, zu korrelieren, um die Schätzung des Störsignals zu berechnen.

19. Entferntes Kommunikationsendgerät (200) nach Anspruch 18, das weiterhin folgendes aufweist:

ein Modul zum Formatieren der Kommunikation zur Übertragung (220).

20. Entferntes Kommunikationsendgerät (200) nach Anspruch 18, das weiterhin folgendes aufweist:

ein Modul zum Übertragen des Kommunikationssignals (222).


## Revendications

1. Procédé de suppression d'une composante de signal perturbatrice périodique d'un signal de communication, la composante de signal perturbatrice ayant une fréquence fondamentale connue ou déterminable, comprenant :

la génération d'une composante de signal perturbatrice estimée ; et
la soustraction de la composante de signal perturbatrice estimée du signal de communication (480) ;

**caractérisé en ce que** l'étape de génération de la composante de signal perturbatrice estimée comprend la mise en corrélation du signal de communication avec une sinusoïde qui est une fonction de la fréquence fondamentale et avec une cosinusoide qui est une fonction de la fréquence fondamentale (460).

2. Procédé selon la revendication 1, dans lequel l'étape de génération d'une composante de signal perturbatrice estimée comprend la mise en corrélation du signal de communication sur un nombre prédéterminé d'échantillons, le nombre prédéterminé étant sélectionné de manière qu'une sinusoïde qui est une fonction de la fréquence fondamentale ait un nombre entier de périodes.

3. Procédé selon la revendication 1, dans lequel l'étape de génération d'une composante de signal perturbatrice estimée comprend l'estimation de l'amplitude et de la phase de la composante de signal perturbatrice à la fréquence fondamentale.

4. Procédé selon la revendication 1, dans lequel l'étape de génération d'une composante de signal perturbatrice estimée comprend l'estimation de l'amplitude et de la phase de la composante de signal perturbatrice à la fréquence fondamentale, et à ses fréquences harmoniques dans une gamme de fréquences prédéterminées (470).

5. Procédé selon la revendication 4, dans lequel la gamme de fréquences prédéterminées correspond à une gamme de fréquences pouvant être détectées de façon audible par l'oreille humaine.

6. Procédé selon la revendication 1, dans lequel l'étape de génération d'une composante de signal perturbatrice estimée (460) comprend l'estimation de l'amplitude et de la phase de la composante du signal perturbatrice à la fréquence fondamentale, et ses fréquences harmoniques dans une gamme de fréquences prédéterminées, et la sommation d'une fonction sinusoïdale de l'amplitude et de la phase du signal perturbateur sur un nombre prédéterminé de composantes de fréquence.

7. Procédé selon la revendication 1, comprenant en outre l'étape de traitement du signal de communication pour la transmission (490).

8. Procédé selon la revendication 1, comprenant en outre les étapes qui consistent :

à déterminer la position d'une trame inactive dans une structure multitrames ; et
à désactiver le circuit pour soustraire la composante de signal perturbatrice estimée pendant le traitement de la trame inactive.

9. Procédé selon la revendication 1, comprenant en outre les étapes qui consistent :

à déterminer la position d'une trame inactive dans une structure multitrames ; et
à additionner une composante de signal perturbatrice dans la trame inactive.

10. Procédé selon l'une des revendications 1, 7, 8 ou 9, dans lequel l'étape de génération comprend :

(a) le calcul d'une première matrice de corrélation entre le signal de communication et la sinusoïde qui est une fonction de la fréquence fondamentale ;
(b) le calcul d'une seconde matrice de corrélation entre le signal de communication et la cosinusoide qui est une fonction de la fréquence fondamentale ;
(c) l'estimation, à partir des première et seconde matrices, de l'amplitude et de la phase de la composante de signal perturbatrice à la fréquence fondamentale et à un nombre prédéterminé de fréquences harmoniques ; et
(d) le calcul, en utilisant l'amplitude et la phase estimées, du signal de perturbation estimée en tant que somme, sur la fréquence fondamentale et un nombre prédéterminé de fréquences harmoniques, d'une sinusoïde qui est une fonction de la fréquence fondamentale.

11. Procédé selon la revendication 10, dans lequel l'étape de calcul de la première matrice de corrélation comprend le fait de calculer :

$$B_{n,est.} = \frac{2}{K}\sum_{k=1}^{K}y_k \bullet \sin\left(2\pi\left(nf_0/f_s\right)k\right)$$

où :

n = le numéro de la composante de fréquence ;
K = le numéro d'échantillon dans un bloc d'entrée ;
k = un compteur qui compte tous les échantillons dans un bloc d'entrée ($k \in [0,K\text{-}1]$) ;
$f_0$ = la fréquence fondamentale ; et
$f_s$ = la fréquence à laquelle l'information d'entrée est échantillonnée.

**12.** Procédé selon la revendication 11, dans lequel l'étape de calcul de la seconde matrice de corrélation comprend le fait de calculer :

$$C_{n,est.} = \frac{2}{K}\sum_{k=1}^{K}y_k \bullet \cos\left(2\pi\left(nf_0/f_s\right)k\right)$$

où :

n = le numéro de la composante de fréquence ;
K = le nombre d'échantillons dans un bloc d'entrée ;
k = un compteur qui compte tous les échantillons dans un bloc d'entrée ($k\in[0,K\text{-}1]$) ;
$f_o$ = la fréquence fondamentale ; et
$f_s$ = la fréquence à laquelle l'information d'entrée est échantillonnée.

**13.** Procédé selon la revendication 12, dans lequel l'étape d'estimation de l'amplitude de la composante de signal perturbatrice comprend le fait de calculer, pour la fréquence fondamentale et un nombre prédéterminé de fréquences harmoniques, ce qui suit :

$$A_{n,est} = \left(\left(B_{n,est}\right)^2 + \left(C_{n,est}\right)^2\right)^{\frac{1}{2}}$$

**14.** Procédé selon la revendication 12, dans lequel l'étape d'estimation de la phase de la composante de signal perturbatrice comprend le fait de calculer, pour la fréquence fondamentale et un nombre prédéterminé de fréquences harmoniques, ce qui suit .

$$\varphi_{n,est} = a\,\tan\left(C_{n,est}/B_{n,est}\right)$$

**15.** Procédé selon la revendication 11, dans lequel l'étape de calcul du signal perturbateur estimé comprend le fait de calculer :

$$e(k)_{est} = \sum_{n=1}^{m}A_{n,est} \bullet \sin\left(2\pi\left(nf_0/f_s\right)k + \phi_{n,est}\right),\quad k \in \left[0,K-1\right]$$

où :

e = la composante de signal perturbatrice ;
n = le numéro de la composante de fréquence ;
m = la fréquence harmonique la plus élevée à laquelle on s'intéresse ;
$A_n$ = l'amplitude la $n^{\text{ième}}$ composante de fréquence ;

K = le nombre d'échantillons dans un bloc d'entrée ;

k = un compteur qui compte tous les échantillons dans un bloc d'entrée ($k \in [0,K-1]$) ;

$f_o$ = la fréquence fondamentale ;

$f_s$ = la fréquence à laquelle l'information d'entrée est échantillonnée ; et

$\Phi_n$ = la phase de la $n^{ième}$ composante de fréquence.

16. Procédé selon la revendication 10, dans lequel les étapes (a) à (d) et l'étape de soustraction sont exécutées dans un terminal de communication éloigné et comprennent en outre l'étape qui consiste à détecter si le terminal éloigné reçoit une entrée vocale, et dans lequel les étapes (a) à (c) sont effectuées uniquement lorsqu'il n'y a pas d'entrée vocale au terminal éloigné.

17. Système pour supprimer une composante de signal perturbatrice périodique ayant une fréquence fondamentale dans un signal de communication, comportant :

un module destiné à générer une composante de signal perturbatrice estimée (314) ; et

un module destiné à soustraire le signal perturbateur estimé du signal de communication (318) ;

**caractérisé en ce que** le module de génération (314) est conçu pour mettre en corrélation le signal de communication avec une sinusoïde qui est une fonction de la fréquence fondamentale et avec un cosinusoïde qui est une fonction de la fréquence fondamentale.

18. Terminal de communication éloigné (200), comportant :

un module de conversion destiné à convertir un signal analogique en un signal de communication comprenant un ensemble d'échantillons numérisés (214) ;

un processeur destiné à recevoir les échantillons numérisés provenant du module de conversion et à calculer une estimation de la composante de signal perturbatrice (218) ; et

un module destiné à soustraire la composante de signal perturbatrice estimée du signal de communication (218) ;

**caractérisé en ce que** le processeur (218) est conçu pour mettre en corrélation le signal de communication avec une sinusoïde qui est une fonction de la fréquence fondamentale et avec une cosinusoide qui est une fonction de la fréquence fondamentale pour calculer l'estimation du signal perturbateur.

19. Terminal de communication éloigné (200) selon la revendication 18, comportant en outre :

un module destiné à formater la communication pour une transmission (220).

20. Terminal de communication éloigné (200) selon la revendication 18, comportant en outre :

un module destiné à transmettre le signal de communication (222).

# FIG. 1

FREQUENCY

REMOTE
RECEIVE
TIMESLOT

| 1 | 2 | 3 | 4 | 5 | 6 | 7 | 8 |

REMOTE
RECEIVE

TIME

TIME DUPLEX
SPACING

FREQUENCY
DUPLEX
SPACING

TRANSMIT
TIMESLOT

| 6 | 7 | 8 | 1 | 2 | 3 | 4 | 5 | 6 | 7 | 8 | 1 |

REMOTE
TRANSMIT

TIME

TDMA FRAME PERIOD
4.6mS

EP 1 228 572 B1

**FIG. 2**

# FIG. 3

# FIG. 4

410

```
START
Â_n = 0
Φ̂_n = 0
```

NEW SAMPLES — 420

CREATE DATA BLOCK — 430

440

SPEECH? —YES→ 450 NO ESTIMATION USE PREVIOUS ESTIMATE

NO

↓

ESTIMATE DISTURBANCE SIGNAL $e_n(k)$ FOR EACH FREQUENCY (n) — 460

SUM $e_n(k)$ OVER ALL FREQUENCIES (n) — 470

SUBTRACT $e_{est}(k)$ FROM COMMUNICATION SIGNAL $x(k)$ — 480

PROCESS SIGNAL — 490

# FIG. 5

| 1 | 2 | 3 | 4 | 5 | 6 | 7 | 8 | 9 | 10 | 11 | 12 | 13 |

| 4.615 ms | 4.615 ms | 4.615 ms | 4.615 ms | 4.615 ms | 4.615 ms | 4.615 ms | 4.615 ms | 4.615 ms | 4.615 ms | 4.615 ms | 4.615 ms | 4.615 ms SACCH |

← 60 ms →

| 14 | 15 | 16 | 17 | 18 | 19 | 20 | 21 | 22 | 23 | 24 | 25 | 26 |

| 4.615 ms | 4.615 ms | 4.615 ms | 4.615 ms | 4.615 ms | 4.615 ms | 4.615 ms | 4.615 ms | 4.615 ms | 4.615 ms | 4.615 ms | 4.615 ms | 4.615 ms IDLE |

← 60 ms →

EP 1 228 572 B1

FIG. 6